(19) Europäisches Patentamt
European Patent Office
Office européen des brevets

(11) EP 1 775 322 A1

(12) **EUROPEAN PATENT APPLICATION**
published in accordance with Art. 158(3) EPC

(43) Date of publication:
**18.04.2007 Bulletin 2007/16**

(21) Application number: **05780109.4**

(22) Date of filing: **24.06.2005**

(51) Int Cl.:
*C08L 69/00* (2006.01) *B61J 1/00* (2006.01)
*C08K 5/17* (2006.01) *C08K 5/3435* (2006.01)
*F21V 1/00* (2006.01) *F21V 3/00* (2006.01)
*G02B 1/04* (2006.01) *G11B 7/135* (2006.01)
*G11B 7/24* (2006.01) *G11B 11/105* (2006.01)

(86) International application number:
**PCT/JP2005/012154**

(87) International publication number:
**WO 2006/001512 (05.01.2006 Gazette 2006/01)**

(84) Designated Contracting States:
**DE FR GB**

(30) Priority: **25.06.2004 JP 2004187478**
**25.10.2004 JP 2004309335**
**01.11.2004 JP 2004317506**
**06.01.2005 JP 2005001613**

(71) Applicant: **MITSUBISHI ENGINEERING-PLASTICS CORPORATION**
**Tokyo 104-0031 (JP)**

(72) Inventors:
- **HIGASHIIZUMI, Emi**
**MITSUBISHI ENGIN.-PLASTICS CORP**
**Hiratsuka-shi,**
**Kanagawa 254-0016 (JP)**
- **SASAKI, Haruo**
**MITSUBISHI ENGINEERING-PLASTICS CORP**
**Hiratsuka-shi,**
**Kanagawa 254-0016 (JP)**
- **NAKANO, Hiroshi**
**MITSUBISHI ENGINEERING-PLASTICS CORP.**
**Hiratska-shi, Kanagawa 254-0016 (JP)**

(74) Representative: **Leidescher, Thomas et al**
**Zimmermann & Partner,**
**Postfach 33 09 20**
**80069 München (DE)**

# (54) AROMATIC POLYCARBONATE RESIN COMPOSITION, AND SUBSTRATE FOR OPTICAL INFORMATION RECORDING MEDIUM USING THE SAME, TRANSPARENT OPTICAL PART, COVER FOR LUMINAIRE AND TRANSPARENT MEMBER FOR VEHICLE

(57) Provided is an aromatic polycarbonate resin composition capable of solving the problem that products are charged in a process of producing the products, and the like.

Employed is An aromatic polycarbonate resin composition comprising 100 parts by weight of a melting-process aromatic polycarbonate resin having a viscosity-average molecular weight of from 10,000 to 30,000, and from 0.00001 to 0.04 parts by weight of an amine compound, the amine compound having neither an aromatic ring nor an acid group in the molecule and having a molecular weight of from 100 to 5,000.



Printed by Jouve, 75001 PARIS (FR)

## Description

### TECHNICAL FIELD

The present invention relates to an aromatic polycarbonate resin composition capable of solving the problem that products are charged in a process of producing the products, and to applications taking advantage of the characteristics of the composition. In particular, the invention relates to a substrate for optical information-recording media, a transparent optical article, a lighting appliance cover and a transparent member for vehicles, of which the peeling charging amount is reduced; the peeling charge occur in releasing the product from a mold or a stamper used in production of the product. In particular, the invention relates to a substrate for optical information-recording media, which is produced from an amine compound-containing, melting-process aromatic polycarbonate resin composition by an injection-molding, and which is free from dye-coating unevenness to occur in spin-coating with dye.

### BACKGROUND ART

As substrates of optical discs such as compact discs, laser discs, photomagnetic discs, digital video discs, and also in near-field recording information media characterized by reading or writing signals from the information face (the face opposite to the substrate relative to the recording layer), the substrates that are produced from a starting material of an aromatic polycarbonate resin by an injection-molding are widely used.

Such substrates are generally produced as follows: A ring-like flat stamper is fitted in a cavity formed between a fixed mold and a morable (side) mold, as clamped therebetween, and a thermoplastic resin melt is injected into the cavity whereby the preformatted informations such as signals (pits) and laser light guide grooves of the stamper are transferred onto the substrates.

Heretofore aromatic polycarbonate resins have been used for production of substrates for the following reasons: The resins have good transparency, strength, heat resistance, dimensional stability and impact resistance, and when substrates are produced from aromatic polycarbonate resin by an injection-molding, the micropatterns (of information signals) as engraved in a stamper can be correctly transferred onto the surfaces of the substrates (molded articles) (that is, the transferability is good), therefore giving high-quality substrates for information recording media, which warp little and which have good surface planarity.

For industrial production of aromatic polycarbonate resins, an interfacial polymerization which comprises reacting bisphenol A and phosgene in a methylene chloride solvent is generally employed. However, since the method necessitates to use phosgene and methylene chloride which are difficult to handle in industrial operation, a different method not using these compounds, which is to produce a polycarbonate from an aromatic dihydroxy compound such as bisphenol A and a carbonic diester such as diphenyl carbonate through interesterification therebetween in the absence of a solvent (melting-process), has become partly industrialized these days. The polycarbonate produced through the interesterification has become used as a material for production of compact discs (CD). However, the optical disc substrates produced from a polycarbonate formed by melting-process as disclosed in USP 5, 606, 008 are problematic for the following reasons: Because of its characteristics, the melting-process aromatic polycarbonate which is produced by an ordinary melting process has many OH groups at its terminal, and therefore the OH groups act as electron-receiving groups, and when the optical disc substrates formed of the resin is released from a mold or a stamper, their surfaces are especially strongly charged in negative polarity. Owing to such strong negative charge of the disc surfaces, they attract dust with the result that the final quality of the discs may worsen. In addition, since the discs attract them each other, they may stick together during transportation, for example, during transportation from injection-molding machine, and therefore there may be a possibility that the CD production may be stopped or the product yield may be lowered. Further, in forming a colorant layer by spin coating, there may be another problem in that coating unevenness (colorant coating unevenness) may occur.

In applications of transparent optical articles and lighting appliance covers, aromatic polycarbonate resins have become used because they have excellent transparency, heat resistance, dimensional stability, impact resistance and they are lightweight and because, when such optical articles are produced from them by an injection-molding process or a rotary molding process, high-quality molded articles that warp little can be obtained. However, the aromatic polycarbonate resin-molded articles are problematic in that, as compared with inorganic glass, their surface hardness is low and they are readily scratched.

For making the surfaces of aromatic polycarbonate resin-molded articles resistant to scratching, a process of hard coat treatment of the surfaces of the molded articles may be employed after the molding process. The process, however, causes dust adhesion to the molded articles. If the surface with dust, impurities or particulate matter adhering thereto is processed for hard coat treatment, the appearance of the coated surface is rough, therefore causing a trouble of appearance failure. Accordingly, a molded article that is charged very little just after production of that and that does not attract dust is desired.

On the other hand, the product assembled has another problem caused by the adhesion of dust and particulate matter; lighting appliances with dust adhering thereto look cloudy and their appearance is not good and their light power is poor, and it causes a trouble of commercial value depression of the appliances.

In particular, regarding plastic lenses for eyeglasses, optical plastic lenses for picture-taking or movie-taking appliances such as cameras, and pickup lenses to be used for recording and reproduction in information recording media, when they are built in the bodies of the appliances, they may be often fitted in the position where dust may be difficult to remove by wiping away or blowing away owing to the structures of the appliances, and, in addition, since they are small, the operation of fitting them in the appliances is difficult.

Moreover, they may be fitted to lighting appliances having complicated structure, or to lighting appliances to be installed in a high place, and in such cases, dust may be difficult to remove from them by wiping away or blowing away, and the operation of cleaning them is thereby difficult.

On the other hand, dust adhesion is problematic to the outer and inner surfaces of head lamp lenses (lamp lenses) for automobiles, to the outer and inner surfaces of interior transparent covers for automobiles, and to both surfaces of resin glass for vehicles. The process that may cause the problem of dust adhesion is hard coat treatment to be applied to the surfaces of molded articles after the molding process, which is for making the surfaces of aromatic polycarbonate resin-molded articles resistant to scratching. However, the molded articles take the peeling charge in releasing them from the mold, thereby having negative charging. Accordingly, they attract dust and particulate matter from the ambient environment. Therefore, when the surfaces with such dust and particulate matter adhering thereto are subjected to hard coat treatment, they have a rough appearance, causing a trouble of appearance failure. Therefore, molded articles which are charged very little just after molded and which does not attract dust are desired.

If the molded articles are transparent members for vehicles, they have a problem that is caused by adhesion of dust and particulate matter thereto in mounting them on vehicles. For example, once dust has adhered to the inside of a head lamp, it could not be removed with ease. In particular, lamps with dust adhering thereto look cloudy and cause appearance failure and lighting insufficiency, thereby, causing commercial value depression and other various troubles. Moreover, the lighting insufficiency may be problematic in point of ensuring the safety in driving.

Heretofore, to control the charge of such aromatic polycarbonate resins, various antistatic agents have been proposed.

For example, proposed are a method of adding an alkali metal salt of sulfonic acid; a method of adding a phosphonium salt of sulfonic acid and a phosphite ester (JP-A 64-14267); a method of adding an amine salt of sulfonic acid and a phosphate ester (JP-A 3-64368). However, the antistatic mechanism in these methods is that the surface of the molded article is made to have a polar group, increasing the affinity thereof with moisture in the air to form a water membrane on the surface of the molded article; thereby the formed charges are made to readily leave from the surface via the water membrane thereon. The aromatic polycarbonate resins obtained by these methods are problematic in that their antistatic capability is often unstable, their transparency, color and hydrolysis resistance thereof worsen, and, in addition, their heat resistance during molding may worsen.

JP-A 2003-128903 and 2003-231801 describe a method of adding an antistatic agent to melt-process polycarbonate resins for optical disc substrates, for the purpose of evading a problem of colorant coating unevenness thereon. However, distearylhydroxyamine which is described as the antistatic agent is not for controlling charging, but this is to take advantage of an ordinary antistatic mechanism that facilitates leaving charges from the product. In addition, since the compound has a positive charge-imparting amino group serving a polar group and also a negative charge-imparting OH group along with it, its effect of controlling the negative charge capability of aromatic polycarbonate resin is low. Triphenylamine also described has a positive charge-imparting effect and its essential antistatic mechanism is for controlling charge formation. However, since the compound acts as a catalyst, it has some problems in that the aromatic polycarbonate resin may be decomposed and its molecular weight may be thereby lowered during molding and disc substrates may be yellowed. Further, pyridine-N-oxide is also problematic in that disc substrates may be yellowed through decomposition owing to its catalytic effect.

JP-A 2001-329157 describes use of a hindered amine stabilizer in various use of aromatic polycarbonate resins for improving the weather resistance and the heat resistance of the resins. However, the amount of the stabilizer to be used for improving the weather resistance and the heat resistance of the resins is large, or that is, about 0.1 parts by weight relative to 100 parts by weight of aromatic polycarbonate resin, and in this case, the stabilizer could not exhibit a charge-controlling effect but may worsen the transparent color and the hydrolysis resistance of the resins; in addition, there are other problems in that much bleeding-out occurs, and the heat resistance of the resins lowers during molding. As a result, the resins could not be used for optical disc substrates.

In general, amine compounds are colored by themselves, and many of amine compounds are unsuitable for transparent disc substrates owing to their color. In addition, since the amine compound acts as a catalyst to aromatic polycarbonate, it is problematic in that the molecular weight of the resin may lower during molding.

## DISCLOSURE OF THE INVENTION

The invention relates to an aromatic polycarbonate resin composition, and to a substrate for optical information-recording media, a transparent optical article, a lighting appliance cover and a transparent member for vehicles comprising the composition. In particular, the invention relates to a substrate for optical information-recording media, produced by an injection-molding process using a stamper and having pits and grooves in its surface, more precisely to a substrate for rewritable or write-once optical information-recording media having a recording layer on the surface of the substrate, more precisely to a substrate for color optical information-recording media having a colorant layer formed by coating with a colorant for forming the recording layer. The substrates for optical information-recording media are free from problems of dust adhesion thereto and substrate-to-substrate adhesion, and free from problems of static charge-caused production failure during its production and use; and when coated with colorant, it is free from colorant coating unevenness that may be caused by charge of the substrate surface.

## BRIEF DESCRIPTION OF THE DRAWING

Fig. 1 an outline view of the structure of a lamp lens analogue produced in Example 7.

## DETAILED DESCRIPTION OF THE INVENTION

We, the present inventors have investigated for preventing negative charge-derived dust adhesion, disc-to-disc adhesion, static charge generation during working, and coating unevenness in hard coating and spin coating, by controlling the negative peeling charge amount in releasing molded articles from mold or stamper in a process of molded and working various articles to thereby remove or reduce charging of the molded articles, and have achieved the invention. Specifically, not based on a mechanism of making generated charges readily leave (reducing held charges by charge-removing or discharging) by adding an antistatic agent to be attained for the same purpose as that in a conventional technique, the invention is for controlling charge formation in an aromatic polycarbonate resin so as to control the charge amount or the charge polarity of the resin by adding to the resin a charge modifier (charge controller) capable of imparting positive chargeability opposite to the negative chargeability that the resin has, and the technique of the invention differs from the prior art technique. Surprisingly, in addition, the method of the invention comprises adding a minor amount of an amine compound having a specific structure, especially a hindered amine compound, to a melting-process aromatic polycarbonate resin, whereby the antistatic capability of the resin is not prevented detracting from the transparent color tone and the hydrolysis resistance thereof. No one knows at all up to the present that such a minor amount of an amine compound having a specific structure may be effective for prevention of static charge of an aromatic polycarbonate resin.

The subject matter of the invention relates to an aromatic polycarbonate resin composition that comprises 100 parts by weight of a melting-process aromatic polycarbonate resin having a viscosity-average molecular weight of from 10,000 to 30,000, and from 0.00001 to 0.04 parts by weight of an amine compound having neither an aromatic ring nor an acid group in the molecule and having a molecular weight of from 100 to 5,000; and to a substrate for optical information-recording media, a transparent optical article, a lighting appliance cover and a transparent member for vehicles comprising the composition.

The contents of the invention are described in detail hereiafter. In this description, the numerical range expressed by the wording "a number to another number" means the range that falls within the range from the former number indicating the lowermost limit of the range and the latter number indicating the uppermost limit thereof.

In this description, ">atom (molecule)" means that the atom (molecule) has two bonds. For example, ">NH" means that the nitrogen atom of "NH" has two bonds.

(Aromatic Polycarbonate Resin)

The aromatic polycarbonate resin to be used in the aromatic polycarbonate resin-containing composition of the invention (hereinafter this may be referred to as a resin material composition) is a melting-process aromatic polycarbonate resin having a viscosity-average molecular weight of from 10,000 to 30,000, and it is a polymer or a copolymer obtained through interesterification of various dihydroxydiaryl compounds and carbonic diesters.

The dihydroxydiaryl compound is typically 2,2-bis(4-hydoxyphenyl)propane (bisphenol A). In the invention, bisphenol A is preferred. In addition to bisphenol A, also usable herein are bis(hydroxyaryl)alkanes such as bis(4-hydroxydiphenyl)methane, 1,1-bis(4-hydroxyphenyl)ethane, 2,2-bis(4-hydroxydiphenyl)butane, 2,2-bis(4-hydroxyphenyl)octane, bis(4-hydroxyphenyl)phenylmethane, 2,2-bis(4-hydroxy-3-methylphenyl)propane, 1,1-bis(4-hydroxy-3-tert-butylphenyl)propane, 2,2-bis(4-hydroxy-3-bromophenyl)propane, 2,2-bis(4-hydroxy-3,5-dibromophenyl)propane, 2,2-bis(4-hydroxy-3,5-dichlorophenyl)propane; bis(hydroxyaryl)cycloalkanes such as 1,1-bis(4-hydroxyphenyl)cyclohexane; dihydroxydiaryl ethers such as 4,4'-dihydroxydiphenyl ether, 4,4'-dihydroxy-3,3'-dimethyldiphenyl ether; dihydroxydiaryl sulfides such as 4,4'-dihydroxyphenyl sulfide, 4,4'-dihydroxy-3,3'-dimethyldiphenyl sulfide; dihydroxydiaryl sulfoxides such as 4,4'-dihydroxydiphenyl sulfoxide, 4,4'-dihydroxy-3,3'-dimethyldiphenyl sulfoxide; dihydroxydiaryl sulfones such as 4,4'-dihydroxydiphenyl sulfone, 4,4'-dihydroxy-3,3'-dimethyldiphenyl sulfone. Preferably, these are combined with bisphenol A.

The carbonic diester includes, for example, diphenyl carbonate, dinaphthyl carbonate, bis(diphenyl) carbonate, dimethyl carbonate, diethyl carbonate, dibutyl carbonate. Of those, preferred is diphenyl carbonate.

The interesterification is attained by heating and stirring a dihydroxyaryl compound and a carbonic diester in an inert gas atmosphere to thereby remove the formed alcohol or phenyl through distillation. The reaction temperature may differ, depending upon the boiling point of the alcohol or phenol to be formed. For example, it may fall within a range of from 120 to 350°C. In the latter stage of the reaction, it is desirable that the system is kept under reduced pressure to facilitate the evaporation of the formed alcohol or phenol. Preferably, a polymerization catalyst is used in the reaction for promoting the polymerization. The polymerization catalyst may be any one generally used for esterification or interesterification, including, for example, alkali metal or alkaline earth metal hydroxides such as sodium hydroxide or potassium hydroxide; boron or aluminium hydroxides, alkali metal salts, alkaline earth metal salts, quaternary ammonium salts; alkali metal or alkaline earth metal alkoxides; organic acid salts with alkali metals or alkaline earth metals; zinc compounds, boron compounds, silicon compounds, germanium compounds, organic tin compounds, lead compounds, antimony compounds, manganese compounds, titanium compounds, zirconium compounds. One or more such catalysts may be used herein either singly or as combined. The amount of the catalyst to be used is preferably from 0.0001 to 1 % by weight, more preferably from 0.0005 to 0.5 % by weight of the starting material; dihydroxyaryl compound.

The constitutive material, aromatic polycarbonate in the invention has a viscosity-average molecular weight of from 10,000 to 30,000. When the viscosity-average molecular weight of the polymer is less than 10,000, the toughness thereof is low; but when larger than 30,000, the flowability thereof is poor. The lowermost limit of the viscosity-average molecular weight is preferably at least 12, 000, more preferably at least 15,000; and the uppermost limit thereof is preferably at most 25,000, more preferably at most 22,000, even more preferably at most 20, 000. Especially when the resin composition is used for substrates for optical information-recording media, the uppermost limit is preferably 25,000 in order that thin micropatterns may be correctly transferred onto the substrates. The viscosity-average molecular weight (M) as referred to in the invention is meant to indicate a value of the calculation by the following Schnell's viscosity equation:

$$(\eta) = 1.23 \times 10^{-4} M^{0.83}$$

wherein η is the limiting viscosity of a solution of the polymer in a solvent of methylene chloride, as measured with an Ubbellohde viscometer.

The melting-process aromatic polycarbonate resin has a problem in that it generally has a high terminal OH group concentration and is therefore readily charged. When the terminal OH group concentration is lowered in the process of producing the resin, the polymerization into polycarbonate is difficult to promote, on the other hand, the side reaction to give a branched structure may readily go on with the result that there may occur another problem in that the color phase of the polymer may be worsened and the moldability of the polymer may be worsened. Accordingly, in order to heighten the effect of the invention, the terminal OH group concentration of the melting-process aromatic polycarbonate resin for use in the invention is generally preferably from 50 to 2000 ppm, more preferably from 300 to 1500 ppm, even more preferably from 400 to 1000 ppm, as measured by a titanium tetrachloride/acetic acid process (described in Makromol. Chem., 88, 215 (1965)). In addition, the branched structure ratio of the melting-process aromatic polycarbonate resin is preferably at most 0.5 mol%, more preferably from 0.05 to 0.3 mol%.

(Amine Compound)

In the invention, 100 parts by weight of the above-mentioned, melting-process aromatic polycarbonate resin is mixed with from 0.00001 to 0.04 parts by weight of an amine compound having neither an aromatic ring nor an acid group in the molecule and having a molecular weight of from 100 to 5, 000. It is known that a compound having an amino group, which is a polar functional group of an electron-donating group, is effective for positive charge control, but the amino group-having compound has a problem of coloration as many kinds of the amino group-having compound are generally known as dyes, or the amino group-having compound of the type has a catalytic action to aromatic polycarbonate resin; and many kinds of the amino group-having compound may often cause coloration owing to the molecular weight reduction or the decomposition thereof in molding. Accordingly, in general, those skilled in the art do not add an amine compound to polycarbonate resin compositions used for substrates for optical information-recording media, transparent

optical parts, lighting appliance covers and transparent members for vehicles.

However, the present inventors have assiduously studied amine compounds that could be effective for charge control not causing problems of coloration or catalytic action, and methods of adding them. As a result, we have found that, when a specific amount of an amine compound having a specific structure is added, it satisfies both the effect attainment and the problem solution. That is, the amine compound to be used in the invention has neither an aromatic ring nor an acid group in the molecule, and has a molecular weight of from 100 to 5, 000. The molecular weight is preferably from 200 to 4, 000. More preferably, the amine compound is a hindered amine compound, even more preferably a compound having a piperidine structure or a piperazine structure. The piperidine structure-having compound is, for example, N,N-bis[2-(tetradecyloxycarbonyl)ethyl]piperazine. Especially preferred is a compound having a piperidine structure, more preferably a 2,2,6,6-tetraalkylpiperidine skeleton in the molecule. Also preferred is a secondary or tertiary N-substituted amine compound. In particular, preferred is a compound having a structure of >NH or >NR (R represents an alkyl group having from 1 to 4 carbon atoms, or an alkenyl group having from 1 to 4 carbon atoms). More preferred is a combination of these preferred ranges. Especially preferred is a hindered amine compound which is generally known as an antioxidant or a light stabilizer for thermoplastic resins such as aromatic polycarbonate resins. Concretely, it includes bis(2,2,6,6-tetramethyl-4-piperidyl) sebacate (commercial products: Sanol LS-770 by Sankyo Co., Ltd, Adekastab LA-77 by Asahi Denka Co., Ltd, Tinuvin 770 by Ciba Speciality Chemicals), bis (1,2,2,6,6-pentamethyl-4-piperidyl) sebacate (commercial products: Sanol LS-765 by Sankyo Co., Ltd), poly[{6-(1,1,3,3-tetramethylbutyl)amino-1,3,5-triazine-2,4- diyl}{(2,2,6,6-tetramethyl-4-piperidyl)imino}hexamethylen e{(2,2,6,6-tetramethyl-4-piperidyl)imine}] (commercial products: Chimassorb 944LD, 944FD by Ciba Speciality Chemicals), N,N'-bis(3-aminopropyl)ethylenediamine-2,4-bis[N-butyl-N-( 1,2,2,6,6-pentamethyl-4-piperidylamino)-6-chloro-1,3,5 -triazine condensate (commercial products: Chimassorb 119FL by Ciba Speciality Chemicals), dibutylamine/1,3,5-triazine/N,N'-bis(2,2,6,6)tetramethyl-4 -piperidyl-1,6-hexamethylenediamine and N-(2,2,6,6-tetramethyl-4-piperidyl)butylamine polycondensate (commercial products: Chimassorb 2020FDL by Ciba Speciality Chemicals), to which, however, the invention should not be limited.

Of those, preferred are bis(2,2,6,6-tetramethyl-4-piperidyl) sebacate, and dibutylamine/1,3,5-triazine/N,N'-bis (2,2,6,6)tetramethyl-4 -piperidyl-1,6-hexamethylenediamine and N-(2,2,6,6-tetramethyl-4-piperidyl)butylamine polycondensate.

In the invention, the amount of the amine compound to be in the composition is preferably at least 0.00001 parts by weight, more preferably at least 0.0001 parts by weight, and preferably at most 0.04 parts by weight, more preferably less than 0.02 parts by weight, even more preferably at most 0.001 parts by weight, most preferably less than 0.001 parts by weight, relative to 100 parts by weight of the melting-process aromatic polycarbonate resin.

(Other Ingredients)

The aromatic polycarbonate resin composition of the invention may contain any other additives, for example, release agent such as esters or silicones; inorganic UV absorbent such as titanium oxide, cerium oxide, and zinc oxide; organic UV absorbents such as benzotriazoles, benzophenones, salicylates, cyanoacrylates, and triazines; organic IR absorbents such as anthraquinones; inorganic IR absorbent such as metal oxides; flame retardant such as halogen compounds, phosphorus compounds, and salts; antioxidant; heat stabilizer; filler such as glass fibers, carbon fibers, metal fibers, whiskers, carbon black, calcium carbonate, and glass beads; transparent conductive material such as ITO; colorant such as dyes, and pigments, optionally added thereto in accordance with the use of the composition. Also if desired, any known conventional antistatic agent may be added thereto, such as those described in the section of background art.

The amount of the additive may vary depending on the type and the object of the additive. In general, it may be at most 5 parts by weight relative to 100 parts by weight of the aromatic polycarbonate resin.

Any other resin than aromatic polycarbonate resin, such as polyethylene, polypropylene, polystyrene, polyethylene terephthalate, polybutylene terephthalate, polyarylate, polycaprolactone, acryl-styrene resin (AS resin), acryl-butadiene-styrene resin (ABS resin), methyl methacrylate-butadiene-styrene resin (MBS resin), or any known terpene resin for improving transferability may be added to the composition. The amount of the resin to be added may be preferably from 0 to 100 parts by weight relative to 100 parts by weight of the aromatic polycarbonate resin.

In particular, when the aromatic polycarbonate resin composition of the invention is used for transparent members for vehicles, it is desirable that a UV absorbent and an antioxidant (excepting an amine compound having neither an aromatic ring nor an acid group in the molecule and having a molecular weight of from 100 to 5,000) are added to the composition in an amount of from 0.001 to 5 parts by weight each.

The UV absorbent for use in the invention includes inorganic UV absorbents such as titanium oxide, cerium oxide, and zinc oxide; and organic UV absorbents such as benzotriazole compounds, benzophenone compounds, salicylate compounds, cyanoacrylate compounds, and triazine compounds. Of those, organic UV absorbents are preferred for use in the invention, and benzotriazole compounds are more preferred.

The benzotriazole compounds are preferably compounds of the following formula (VI), and a condensate of

methyl 3-[3-t-butyl-5-(2H-benzotriazol-2-yl)-4-hydroxyphenyl] propionate and polyethylene glycol.

(VI)

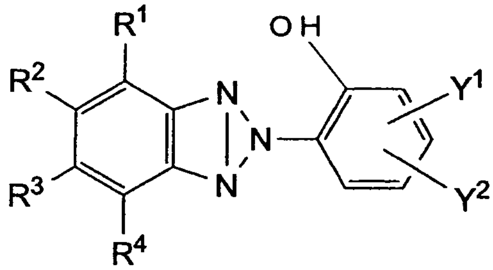

(In formula (VI), $R^1$ to $R^4$ each represents a hydrogen atom, an OH group, a halogen atom, or a hydrocarbon group having from 1 to 12 carbon atoms; $Y^1$ and $Y^2$ each represents a hydrogen atom, or a hydrocarbon group having from 1 to 40 carbon atoms and optionally having a nitrogen atom and/or an oxygen atom.)

Examples of the benzotriazole compounds of the above formula (VI) are 2-(5-methyl-2-hydroxyphenyl)benzotriazole (commercial products: Tinuvin P by Ciba Speciality Chemicals) , 2-[2-hydroxy-3,5-bis(α,α-dimethylbenzyl)phenyl]-2H -benzotriazole (commercial products: Tinuvin 234 by Ciba Speciality Chemicals), 2-(3,5-di-t-butyl-2-hydroxyphenyl)benzotriazole (commercial products: Tinuvin 320 by Ciba Speciality Chemicals), 2-(3-t-butyl-5-methyl-2-hydroxyphenyl)-5- chlorobenzotriazole (commercial products: Tinuvin 326 by Ciba Speciality Chemicals), 2-(3',5'-di-t-butyl-2'-hydroxyphenyl)-5 -chlorobenzotriazole (commercial products: Tinuvin 327 by Ciba Speciality Chemicals), 2-(3,5-di-t-amyl-2-hydroxyphenyl)benzotriazole (commercial products: Tinuvin 328 by Ciba Speciality Chemicals), 2-(2-hydroxy-5-t-octylphenyl)benzotriazole (commercial products: Tinuvin 329 by Ciba Speciality Chemicals), 2-(3,5-di-t-amyl-2-hydroxyphenyl)benzotriazole[methyl-3-[3 -t-butyl-5-(2H-benzotriazol-2-yl)-4-hydroxyphenyl] propionate polyethylene glycol] condensate (commercial products: Tinuvin 213 by Ciba Speciality Chemicals), 2,2'-methylenebis[6-(2H-benzotriazol-2-yl)-4-(1,1,3,3 -tetramethylbutyl)phenol], and compound of the following formula (VII):

(VII)

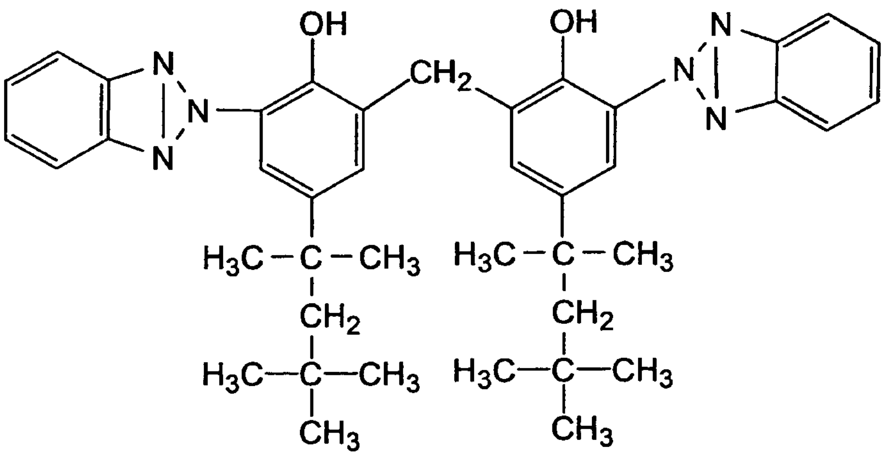

,

to which, however, the invention should not be limited.

Of those, especially preferred are 2-(2'-hydroxy-5'-t-octylphenyl)benzotriazole, 2-[2-hydroxy-3,5-bis(α,α-dimethylbenzyl)phenyl]-2H -benzotriazole, compounds of the above formula (VII), 2-(4,6-diphenyl-1,3,5-triazin-yl)-5-[(hexyl)oxy]-phenol, 2-[4,6-(bis(2,4-dimethylphenyl)-1,3,5-triazin-2-yl)-5-( octyloxy)phenol.

The amount of the UV absorbent to be added to the composition of the invention is preferably from 0.001 to 5 parts by weight, more preferably from 0.05 to 2 parts by weight relative to 100 parts by weight of the aromatic polycarbonate

resin. When the amount is at least 0.001 parts by weight, the absorbent is more effective; and when it is at most 5 parts by weight, the problem of mold contamination in injection molding may be more effectively inhibited. One or more different types of UV absorbents may be used either singly or as combined. When a hindered phenol compound is used, its amount may be from 0.001 to 5 parts by weight, preferably from 0.01 to 1 part by weight relative to 100 parts by weight of the aromatic polycarbonate. When its amount is at least 0.01 parts by weight, its effect for improving weather resistance is more remarkable; and when its amount is at most 1 part by weight, it is free from a problem of detracting from the heat resistance of the resin melt.

As in the above, a combination of a benzotriazole compound as a UV absorbent and a hindered amine compound as an amine compound for controlling the peeling charge in molding is preferably employed in the invention. For example, the combination of these two types of nitrogen-containing compounds may be considered as follows:

In point of the weather resistance of the resin composition, adding the hindered amine compound to the conventional benzotriazole compound may enhance the UV-absorbent effect.

In point of the peeling charge control of the composition in molding, the conventional benzotriazole compound could not have a remarkable positive charge-imparting effect. Of hindered amine compounds, those having a specific structure, that is, having neither an aromatic group nor an acid group (e.g., OH group) are especially effective for positive charge impartation.

The antioxidant for use in the invention is not specifically defined, not overstepping the scope and the gist of the invention. Preferably, it includes phosphorus compounds and hindered phenol compounds, more preferably phosphorus compounds.

Preferred examples of the phosphorus compounds are phosphorous acid, phosphoric acid, phosphonous acid, phosphonic acid and their salts or esters.

Preferred examples of the phosphites (phosphite compounds) include triphenyl phosphite, tris(nonylphenyl) phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, tris(2,4-di-t-butylphenyl) phosphite, bis(2,6-di-t-butyl-4-methylphenyl)pentaerythritol diphosphite, bis(2,4-di-t-butylphenyl)pentaerythritol diphosphite, and distearylpentaerythritol diphosphite.

Preferred examples of the phosphates (phosphate compounds) indlude tributyl phosphate, triethyl phosphate, trimethyl phosphate, triphenyl phosphate, diphenylmonoorthoxenyl phosphate, dibutyl phosphate, dioctyl phosphate, and diisopropyl phosphate.

Preferred examples of the phosphonites include tetrakis(2,4-di-isopropylphenyl)-4,4'-biphenylene diphosphonite, tetrakis(2,4-di-tert-butylphenyl)-4,3'-biphenylene diphosphonite, tetrakis(2,6-di-isopropylphenyl)-4,4'-biphenylene diphosphonite, tetrakis(2,6-di-n-butylphenyl)-4,4'-biphenylene diphosphonite, tetrakis(2,6-di-tert-butylphenyl)-4,4'-biphenylene diphosphonite, tetrakis(2,6-di-tert-butylphenyl)-4,3'-biphenylene diphosphonite, tetrakis(2,6-di-tert-butylphenyl)-3,3'-biphenylene diphosphonite, and bis(2,4-di-tert-butylphenyl)phenyl phosphonite.

Examples of the phosphonates include dimethyl benzenephosphonate, diethyl benzenephosphonate, and dipropyl benzenephosphonate.

The hindered phenol compound for use in the invention includes n-octadecyl 3-(3',5'-di-t-butyl-4'-hydoxyphenyl) propionate, 1,6-hexanediol bis[3-(3,5-di-t-butyl-4'-hydroxyphenyl)propionate], pentaerythrityl tetrakis-[3-(3',5'-di-t-butyl-4'-hydroxyphenyl)propionate], 3,9-bis[1,1-diphenyl]propionate, 3,9-bis[1,1-dimethyl-2-[β-(3-t-butyl-4-hydroxy-5 -methylphenyl)propionyloxy]ethyl]-2,4,8,10-tetroxaspiro[5-5]undecane, triethylene glycol bis[3-(3-t-butyl-5-methyl-4-hydroxyphenyl)propionate], 3,5-di-t-butyl-4-hydroxybenzylphosphonate-diethyl ester, 1,3,5-trimethyl-2,4,6-tris-(3,5-di-t-butyl-4-hydroxybenzyl )benzene, 2,2-thio-diethylenebis-[3-(3,5-di-t-butyl-4-hydoxyphenyl) propionate], tris-(3,5-di-t-butyl-4-hydroxybenzyl) isocyanurate, and N,N'-hexamethylenebis-(3,5-di-t-butyl-4-hydroxy-hydrocinna mide), to which, however, the invention should not be limited.

Of those, preferred are n-octadecyl-3-(3',5'-di-t-butyl-4'-hydroxyphenyl) propionate, 1,6-hexanediol bis[3-(3,5-di-t-butyl-4'-hydroxyphenyl)propionate], and 3,9-bis[1,1-dimethyl-2-[β-(3-t-butyl-4-hydroxy-5 -methylphenyl)propionyloxy]ethyl]-2,4,8,10-tetroxaspiro[5. 5]undecane.

The amount of the antioxidant to be in the composition of the invention is preferably from 0.001 to 5 parts by weight, more preferably from 0.01 to 1 part by weight relative to 100 parts by weight of the aromatic polycarbonate. When the amount is at least 0.001 parts by weight, the antioxidant effects more; and when at most 5 parts by weight, the antioxidant may more effectively prevent from holding coloration of the molded articles and mold contamination in molding. One or more different types of the antioxidants may be used herein either singly or as combined.

The release agent which is added for the purpose of facilitating the release from mold in molding the composition is preferably a fatty acid ester compound. The fatty acid ester compound is preferably a partial or complete ester of a saturated fatty acid having from 10 to 30 carbon atoms with a mono or polyalcohol having from 1 to 20 carbon atoms. The partial or complete ester of such a saturated fatty acid with a mono or polyalcohol includes stearic acid monoglyceride,

stearic acid diglyceride, stearic acid triglyceride, stearic acid monosorbate, behenic acid monoglyceride, pentaerythritol monostearate, pentaerythritol tetrastearate, pentaerythritol tetrapelargonate, propylene glycol monostearate, stearyl stearate, palmityl palmitate, butyl stearate, methyl laurate, isopropyl palmitate, biphenyl biphenate, sorbitan monostearate, and 2-ethylhexyl stearate.

(Preparation of Aromatic Polycarbonate Resin Composition)

For preparing the aromatic polycarbonate resin composition of the invention, employable is a method comprising taking an aromatic polycarbonate resin, an amine compound and other optional various resins and additives each in a predetermined amount, mixing them in a mixer such as a V-molded blender, then melt-kneading the resulting mixture in a kneader such as an extruder and pelletizing it.

For preparing the resin composition, employable is a method comprising taking an aromatic polycarbonate resin and optional various resins and additives as above, each in a predetermined amount, mixing them in a mixer such as a V-molded blender, then melt-kneading the resulting mixture in a kneader such as an extruder and pelletizing it.

The time at which the amine compound, the UV absorbent, the antioxidant and other various resins and additives are added and the method for adding them are not specifically defined. Regarding the method of adding them, the ingredients may be directly mixed and kneaded with a polycarbonate resin, or they may be added by dissolving in a suitable solvent, or by preparing a high-concentration master batch comprising a small amount of a polycarbonate resin or other resins. The ingredients may be separately added to a polycarbonate resin, or may be simultaneously added thereto. In case where a hindered phenol compound is used as a weather resistance improver, then the ingredients may be separately added to polycarbonate or may be simultaneously added thereto. Depending on the type thereof, the additives may be added in the last step of polycondensation in producing a polycarbonate resin.

(Substrate for Optical Information-Recording Media)

The substrate for optical information-recording media of the invention may be produced, starting from the above-mentioned resin composition, for example, by an injection-molding process.

The cylinder temperature and the mold temperature in the injection-molding machine for the substrate production may be suitably determined depending on the information signal density or on the requirement for the warping or the plane oscillation. The injection-molding mold for the substrate production is so designed that a stamper with information signals such as pits and grooves, as engraved on its surface to have a submicron-order depth or distance, is disposed to be exposed out in one or both surfaces of the mold cavity, the cylinder temperature in the injection-molding machine is set within a range of from 250 to 400°C, the mold temperature is set within a range of from 50 to 140°C, and a resin melt is injected into the mold cavity to produce a substrate (molded article) with information signals transferred thereonto. In this stage, a compression injection-molding technique may improve the transferability.

The invention is preferably used for a substrate for rewritable or write-once optical information-recording media having a recording layer as an information layer on the surface of the substrate thereof; more preferably for a substrate for color optical information-recording media having a colorant-coating layer as the recording layer on the surface of the substrate thereof. "Information layer" as referred to in the invention means a layer to carry information thereon, and this means a recording layer in recordable information-recording media, and means a (reproducing light) reflective layer in reproduction-only media. The substrate may be transparent or nontransparent. In case where recording/reproducing laser light passes through the inside of the substrate like in current optical disc substrates, the substrate must be transparent; but in case where laser acts to directly read (reproduce) or record from the information face as in near-field recording, the substrate may be nontransparent. Specifically, when the substrate is transparent, the information is read out or written in (for recording) from the information face having an information layer thereon, or from the surface opposite to the information face; but when the substrate is nontransparent, the information is read out or written in from the information face. Since the substrate of the invention is highly transparent, it may be used in any applications. Concretely, it may be used as a substrate for information-recording media, for example, optical discs such as compact discs, laser discs, photomagnetic discs, digital video discs, and near-field recording media where information signals are read out or written in from the information face thereof. Preferably, the substrate for information-recording media of the invention is a single substrate having a thickness of from 0.3 to 1.5 mm.

One application example of the substrate for optical information-recording media of the invention is color optical information-recording media. Color optical information-recording media as referred to herein are, for example, optical information-recording media in which a color-recording layer for recording or reading signals as in the above is formed on the information face of the substrate.

For forming the color-recording layer, generally employed is a spin-coating method in which a colorant solution prepared by dissolving an organic colorant in an organic solvent is applied onto a molded substrate so as to fill up the grooves formed in the signal face of the substrate. The spin-coating may be attained generally by the following process,

using a spin-coating device that comprises a dispenser nozzle, a spinner head, a scattering guard wall and an exhauster. First, a molded substrate is put on a spinner head, and then, while the spinner head is rotated by a driving motor, a coating solution is applied onto the surface of the inner peripheral area of the substrate, preferably at the position more inside by from 2 to 3 mm than the innermost peripheral edge of the grooves of the substrate, through the nozzle of the coating solution feeder. The coating solution applied onto the substrate is radially spread toward the outer periphery of the substrate owing to the centrifugal force given thereto, forming a coating film. During the spin-coating operation, a dry vapor such as air is introduced into the device via the opening (vapor inlet port) provided in the upper site of the scattering guard wall so that the vapor is made to run above the coating film and then it is exhausted out through the lower site of the spin-coating device. By the vapor circulation, the solvent is removed from the coating film, and the coating film is thereby dried. The substrate may be introduced into a drying oven which may be referred to as a baking oven, in which the remaining solvent is removed as completely as possible.

For write-once optical discs, the colorant to be used shall have an absorption region in a laser light wavelength range (from 300 to 850 nm). Concretely, it includes azo dyes, cyanine dyes, phthalocyanine dyes, azulenium dyes, squarylium dyes, polymethine dyes, pyrylium dyes, thiopyrylium dyes, indeaniline dyes, naphthoquinone dyes, anthraquinone dyes, triallylmethane dyes, aminium dyes, diimmonium dyes, metal chelate dyes comprising an azo ligand compound and a metal, metal complexes, and their mixtures. Preferred are azo-type, cyanine-type and phthalocyanine-type organic dyes. These dyes have excellent sensitivity to signals and are readily soluble in solvent, and have good lightfastness, and therefore they give high-quality write-once optical discs.

Concretely, the organic solvent for dye solution includes esters such as butyl acetate, and cellosolve acetate; ketones such as methyl ethyl ketone, cyclohexanone, and methyl isobutyl ketone; chlorohydrocarbons such as dichloromethane, 1,2-dichloroethane, and chloroform; amides such as dimethylformamide; hydrocarbons such as cyclohexane; ethers such as tetrahydrofuran, ethyl ether, and dioxane; alcohols such as ethanol, n-propanol, isopropanol, n-butanol, and diacetone alcohol; fluorine-containing solvents such as 2,2,3,3-tetrafluoropropanol; glycol ethers such as ethylene glycol monomethyl ether, ethylene glycol monoethyl ether, and propylene glycol monomethyl ether. One or more such solvents may be used either singly or as combined in consideration of the solubility of the dyes to be used therein. Preferred are fluorine-containing solvents such as 2,2,3,3-tetrafluoropropanol, octafluoropentanol, dibutyl ether.

The charge voltage of the substrate for optical information-recording media of the invention is preferably within a range of from -0.8 to 0.8 kV, more preferably from -0.5 to 0.5 kV, even more preferably from -0.3 to 0.3 kV, most preferably around 0.

(Transparent Optical Article)

The transparent optical article of the invention may be produced, starting from the above resin composition.

A preferred example of the additive to the aromatic polycarbonate resin composition to be used for the transparent optical article of the invention is a UV absorbent such as the above-mentioned benzotriazole compound.

Preferably, the above-mentioned phosphorus-containing heat stabilizer or hindered phenol-type stabilizer may be added to the aromatic polycarbonate resin composition for the purpose of preventing molecular weight reduction or discoloration in molding.

The transparent optical article of the invention includes high-performance and high-definition optical articles, typically for example, optical plastic lenses such as lenses for eyeglasses, and lenses for sunglasses; optical plastic lenses for picture-taking or movie-taking appliances such as cameras, film-integrated cameras (lens-built-in films), and video cameras; pickup lenses to be used for recording in and reading from information-recording media such as CD (compact disc), CD-ROM, CD-R, CD-RW, CD-VIDEO, MO, and DVD. In the invention, "transparent" means that the turbidity is at most 1 %, preferably from 0 to 0.8 %. Not limited to colorless transparent ones, this includes those colored with a colorant (e.g., color lenses for sunglasses).

The transparent optical article of the invention may be produced, starting from the above-mentioned resin composition, for example, by injection-molding. The cylinder temperature and the mold temperature in the injection-molding machine may be, for example, as follows: The cylinder temperature may be within a range of from 250 to 400°C; the mold temperature may be within a range of from 50 to 140°C; and a resin melt may be injected into the mold cavity to produce an article. For making the thus-injection-molded article have a desired shape and a desired function, the article may be cut or polished.

When the surface of transparent optical article is charged, the transparent optical article may readily attract dust and there may occur some problems in that it may lower the transparency of the article and may have some negative influences on the surface treatment of the article. Accordingly, in the invention, it is desirable that the charge voltage of the article is, immediately after molded, preferably within a range of from -1.0 to 1.0 kV, more preferably from -0.8 to 0.8 kV, even more preferably from -0.5 to 0.5 kV, particularly preferably from -0.3 to 0.3 kV, most preferably around 0.

For the transparent optical article of the invention, at least an article of the surface of the article may be coated, for example, by hard coat treatment, UV block treatment, antireflection coat treatment, water repellency treatment or

impact resistant coat treatment. The coating treatment may improve the weather resistance and the impact resistance of the coated article, may control the refractive index thereof, and may make the coated article have antireflection capability, rubbing resistance and scratch resistance.

The coating method and the working method are not specifically defined. For example, herein employable are a dipping method, a spraying method, a roll-coating method, a flow-coating method, a spin-coating method, a vacuum evaporation method, or a chemical vapor deposition (CVD) method such as a plasma chemical vapor deposition method.

For example, the hard coat material may be any known one, for which, however, preferred is a composition comprising an organic silicon compound as the essential ingredient thereof, or a composition comprising a polyfunctional acrylate as the essential ingredient thereof. Depending on the type of the hard coat material used, the coated article may require post treatment for curing. Examples of the hard coat material are described: those comprising an organic silicon compound as the essential ingredient thereof include a monofunctional to tetrafunctional alkoxysilane, and some of them may require heat treatment for curing. If desired, employable is a method of applying a suitable primer (for pretreatment) (for example, polyurethane resins). Those comprising a polyfunctional acrylate as the essential ingredient thereof may include a polyfunctional acrylate as colloidal silica and diacrylate (for example, as in USP 5075348), and they requires treatment with UV rays or radiations for curing.

(Lighting Appliance Cover)

The lighting appliance cover of the invention may be produced, starting from the above-mentioned resin composition.

The aromatic polycarbonate resin composition to be used for the lighting appliance cover of the invention preferably contains an organic UV absorbent, especially preferably the above-mentioned benzotriazole compound.

For preventing the molecular weight reduction or the discoloration during molding thereof, the composition preferably contains a phosphorus-containing heat stabilizer or a hindered phenol stabilizer added thereto.

In addition, it is also desirable to add a release agent to the composition, more preferably a fatty acid ester compound, even more preferably the above-mentioned, mono or polyalcohol higher fatty acid ester thereto.

Starting from the above-mentioned resin composition, the lighting appliance cover of the invention may be produced, for example, by an injection-molding process or a rotary-molding process.

In the injection-molding process, for example, the cylinder temperature of the injection-molding machine may be within a range of from 250 to 400°C, the mold temperature may be within a range of from 50 to 140°C, and the product may be produced under the defined condition.

On the other hand, in the rotary-molding process, a granular resin prepared by a melt interesterification process, or a granular resin composition prepared by adding various additives to the resin is ground and the resulting powder is used. The grinding method is suitably a mechanical grinding method, a mechanical freezing grinding method or a solvent treatment method. Especially preferably, the grinding is attained in a turbo mill or in a low-temperature turbo mill. The powder shall have a size and a shape enough for the flowability for rotary molding. Preferably, it has a particle size of from 100 $\mu$m to 1500 $\mu$m, more preferably from 150 $\mu$m to 500 $\mu$m, capable of passing through a 10 to 150 mesh-pass JIS standard sieve, more preferably a 30 to 100 mesh-pass JIS standard sieve. The rotary molding may be attained in any known conventional manner. Concretely, a method mentioned below may be employed herein. In a mold that rotates monoaxially or straightly biaxially, or in a mold that rocks and rotates, an aromatic polycarbonate resin powder is put, and before or after the powder is put therein, the mold is heated whereby the resin is adhered and fused to the inner surface of the mold that rotates in a closed condition, and thereafter the mold is cooled and the molded article formed on the surface inside the mold is taken out. The process thus gives the intended rotation-molded article. After the molded article is taken out of the mold, it may have a residual strain formed during its release depending on its shape; and therefore the article may be optionally annealed. The molding temperature in rotary molding to give the lighting appliance cover of the invention is preferably lower than 300°C, more preferably from 270°C to 290°C.

When the surface of the lighting appliance cover is charged, it may attract dust and may cause various problems in that, when someone touches it, he/she may have an unpleasant feel owing to the surface discharging, or the lighting appliance covers may stick together and are therefore problematic during their production and transportation. In addition, the charged cover may have a poor outward appearance when its surface is coated with a coating layer such as a hard coat layer.

Accordingly, the charge voltage of the lighting appliance cover of the invention is preferably within a range of from -0.8 to 0.8 kV, more preferably from -0.5 to 0.5 kV, even more preferably from -0.3 to 0.3 kV, most preferably 0.

As a treatment for making the lighting appliance cover of the invention has a function, at least an article of the lighting appliance cover may be often subjected to coating treatment. Examples of the coating treatment are hard coat treatment, UV block treatment, antireflection coat treatment, water repellency treatment, and impact resistance treatment. Thus treated in such a manner, the cover may have improved weather resistance and impact resistance, its refractivity may be controlled and it may have antireflection capability.

For example, the hard coat treatment is for improving the scratch resistance of the cover. For coating or processing the cover, employable are a dipping method, a spraying method, a roll-coating method, a flow-coating method and a spin-coating method. In general, a spraying method is employed for forming a protective film effective for both scratch resistance and UV block capability.

In general, the hard coat material may comprise an organic silicon compound as the essential ingredient thereof or may comprise a polyfunctional acrylate as the essential ingredient thereof.

The lighting appliance cover of the invention indicates a member that covers at least an article of a light source such as electric bulbs, fluorescent lamps, and LED, used indoors or outdoors, and it includes a cover for lighting electric appliances, as well as a cover having a tabular shape or any other predetermined shape, which is to protect the surfaces of the lighting appliances embedded in ceilings, walls or floors, or which makes the lighting appliances have a specific design, or which may diffusively reflect the light from a light source to thereby broaden or soften it. The cover may be integrated with any other member such as a socket to hold a light source. The lighting appliance cover is not always required to be transparent, and it may be colored or nontransparent. When the cover is not required to transmit the light from a light source, the cover may be as such.

(Transparent Member for Vehicles)

The transparent member for vehicles of the invention may be produced, starting from the above-mentioned resin composition.

In the transparent member for vehicles of the invention, a combination of the above-mentioned benzotriazole compound serving as a UV absorbent and the hindered amine compound as a type of an amine compound for controlling the peeling charge in molding is preferably employed. For example, the combination of these two types of nitrogen-containing compounds may be considered as follows.

Adding the hindered amine compound to the conventional benzotriazole compound may enhance the UV-absorbent effect of the additives in point of the weather resistance of the resin composition.

The conventional benzotriazole compound could not have a remarkable positive charge-imparting effect in point of the peeling charge control of the composition in molding. Of hindered amine compounds, those having a specific structure, or that is, having neither an aromatic group nor an acid group (e.g., OH group) are especially effective for positive charge impartation.

In particular, the combination is essentially for the purpose of reducing or removing the production failure which is caused by dust adhesion to products in producing them. On the other hand, there may occur some problem caused by dust/particulate matter adhesion in mounting the member on vehicles. For example, when dust has once adhered to the inside of a head lamp, it is difficult to remove the dust with ease. In particular, lamps with dust adhering thereto look cloudy and cause appearance failure and lighting insufficiency, therefore causing commercial value depression and other various troubles. Moreover, the lighting insufficiency may be problematic in point of ensuring the safety in driving. For preventing the dust adhesion trouble, an antistatic agent such as phosphonium benzenesulfonate which has heretofore been used may be added to the composition. Preferably, the composition contains such an antistatic agent in an amount of from 0.1 to 20 parts by weight relative to 100 parts by weight of the aromatic polycarbonate therein.

The transparent member for vehicles of the invention may be produced by various molding methods suitable for the intended object, starting from the above-mentioned aromatic polycarbonate resin composition of the invention. For example, a head lamp lens may be produced by an injection-molding method.

The cylinder temperature and the mold temperature in the injection-molding machine may be suitably determined. For example, the cylinder temperature in the injection molding machine may be set within a range of from 250 to 400°C; and the mold temperature may be within a range of from 50 to 140°C. In that condition, a melting resin may be injected into a mold to produce a substrate (molded article) which is transferred information signals. In this stage, when a compression injection-molding technique is employed, the transferability may be further more improved.

The invention is especially favorable for lighting tools for vehicles such as head lamp lenses, rear lamp lenses and fog lamp lenses for vehicles, as well as for room lamps for vehicles, resin windowpanes for vehicles, meter covers for vehicles, and windshields for vehicles. Vehicles as referred to in the invention includes automobiles, motorcycles, trains, bicycles, and tricycles.

Lighting tools for vehicles are the preferable use of the resin composition. In such various uses, coating treatment for functionality impartation is often performed, for example, hard coat treatment, UV block treatment, antireflection treatment, water repellency treatment, and impact resistance coat treatment.

The coating treatment may improve the weather resistance and the impact resistance of the coated members, and may control the refractivity thereof, and may make the coated members have antireflection capability.

For example, the hard coat treatment is attained for the purpose of improving the scratch resistance of the coated members. For coating or processing the members, employable are a dipping method, a spraying method, a roll-coating method, a flow-coating method, a spin-coating method, and a plasma chemical vapor deposition method.

The hard coat material preferably comprises an organic silicon compound as the essential ingredient thereof, or comprise a polyfunctional acrylate as the essential ingredient thereof.

Preferably, the charge voltage of the transparent member for vehicles of the invention is, immediately after molded, within a range of from -1.0 to 1.0 kV, more preferably from-0.8 to 0.8 kV, even more preferably from -0.5 to 0.5 kV, still more preferably from -0.3 to 0.3 kV, most preferably 0.

A protective film may be formed on the transparent member for vehicles of the invention. Preferably, the protective film is a silicon-based protective film formed through plasma chemical vapor deposition, for example, by the method described in JP-A 2002-260412, and 2000-345347.

As their examples, the structure and the shape of head lamp lenses for vehicles are described in JP-A 2001-126512, 7-268089, 6-199258, 10-86743, and 2004-182107, to which, however, the invention should not be limited. For example, herein mentioned are those having a length of 29 cm, a width of 15 cm, a depth of 3 cm and a thickness of about 0.2 cm, and having a projection pattern for light scattering on the inner surface thereof, as in JP-A 7-268089, paragraph [0044] and Fig. 1.

The turbidity of the transparent member for vehicles of the invention is preferably from 0 to 0.8 %; the color hue (YI value) thereof is preferably at most 2.3 (more preferably at most 2); the surface resistivity thereof is preferably from $10^9$ to $10^{16}$ $\Omega$; and the charge voltage thereof is preferably from -1.0 to 1.0 kV. More preferably, the member satisfies all these requirements.

EXAMPLES

The invention is described in more detail with reference to the following Examples and Comparative Examples. However, the invention should not be limited to these Examples, not overstepping the sprit and the scope thereof. In the Examples, parts are by weight.

The materials used in the following Examples are mentioned below.

Aromatic polycarbonate resin: Polycarbonate having a viscosity-average molecular weight of 16,000, as produced by melcing-process (Mitsubishi Engineering Plastics' product, trade name of Novarex™ M7020AD2, having a terminal OH group amount of about 500 ppm).

Amine compound: Bis(2,2,6,6-tetramethyl-4-piperidyl) sebacate (Ciba Speciality Chemicals' product, trade name of Tinuvin 770).

Polymer of dimethyl succinate 4-hydroxy-2,2,6,6-tetramethyl-1-piperidine-ethanol: Ciba Speciality Chemicals' product, trade name of Tinuvin 622LD. Triphenylamine: (Comparative Example), Tokyo Chemical's reagent (special class grade chemical).

Other additives:

Phosphite-type antioxidant: Asahi Denka Kogyo's products, trade name of Adekastab 2112.

UV absorbent: Ciba-Geigy's product, trade name of Tinuvin 329 (2-(2'-hydroxy-5'-t-octylphenyl)benzotriazole).

Release agent: Riken Vitamin's products, trade name of Rikemal S-100A (glycerin monostearate).

[Example 1] (Substrate for Optical Information-Recording Media)

100 parts by weight of the aromatic polycarbonate resin and 0.0004 parts by weight of the amine compound, bis(2,2,6,6-tetramethyl-4-piperidyl) sebacate (Tinuvin 770) were taken and mixed in a tumbler, and the resulting mixture was melted, kneaded and pelletized, using a 40 mmϕ extruder equipped with a vent, at a cylinder temperature of 250°C.

<Formation and Evaluation of Optical Disc Substrate>

Starting from the thus-obtained pellets, transparent optical disc substrates were formed, using an injection-molding machine equipped with a mold for optical disc production (Sumitomo Heavy Industries Model DISK3), at a cylinder temperature of 380°C and a mold temperature of 118°C. Thus obtained, the optical disc substrates were tested and evaluated for the following items.

[Test and Evaluation Method]

An organic azo dye is dissolved in an organic solvent, octafluoropentanol to prepare a 5 wt.% dye solution, and 300 μl of the dye solution is dropwise applied onto a color optical disc substrate having a diameter ϕ of 120 mm and a thickness of 1.2 mm and rotating at a speed of 5000 rpm, using a spin coater, and then this is spontaneously dried to remove the remaining solvent, thereby forming a color optical disc. This is observed with an optical microscope for the presence or absence of the color protrusion from the innermost true circle toward the inside thereof. When the protrusion is 0.5 mm or more, the sample has colorant coating unevenness (yes); and when there is no protrusion of at

least 0.5 mm, the sample has no colorant coating unevenness (no).

The charge amount of the molded substrate is determined as follows: A digital electrostatic potentiometer, Kasuga Electric's KSD-0162 is set, spaced from the surface of the molded substrate by 6. 0 cm therebetween, and the electrostatic charge amount of the sample is measured. 16 discs are randomly sampled after 10-shot molding operation, they are tested, and their data are averaged.

Three discs are piled up, and their color tone is visually evaluated.

The results are all shown in Table 1.

[Example 2] (Substrate for Optical Information-Recording Media)

Color optical discs were formed in the same manner as in Example 1, for which, however, 0.0004 parts by weight of a polycondensate of dibutylamine/1,3,5-triazine/N,N'-bis(2,2,6,6)-tetramethyl-4-piperidyl-1,6-hexamethylenediamine and N-(2,2,6,6-tetramethyl-4-piperidyl)butylamine (Chimassorb 2020FDL) was used as the amine compound, and the discs were tested and evaluated for the presence or absence of colorant coating unevenness, the charge amount of the molded substrate and the color tone thereof. The results are shown in Table 1.

[Comparative Example 1]

Color optical discs were formed in the same manner as in Example 1, for which, however, 0.0004 parts by weight of triphenylamine was used as the amine compound, and the discs were tested and evaluated for the presence or absence of colorant coating unevenness, the charge amount of the molded substrate and the color tone thereof. The results are shown in Table 1.

[Comparative Example 2]

Color optical discs were formed in the same manner as in Example 1, for which, however, a polymer of dimethyl succinate and 4-hydroxy-2,2,6,6-tetramethyl-1-piperidine-ethanol (Tinuvin 622LD) was used as the amine compound, and the discs were tested and evaluated for the presence or absence of colorant coating unevenness, the charge amount of the molded substrate and the color tone thereof. The results are shown in Table 1.

[Comparative Example 3]

Color optical discs were formed in the same manner as in Example 1, to which, however, bis(2,2,6,6-tetramethyl-4-piperidyl) sebacate was not added, and the discs were tested and evaluated for the presence or absence of colorant coating unevenness, the charge amount of the molded substrate and the color tone thereof. The results are shown in Table 1.

Table 1

| | Amount of Amine Compound Added (%) | Charge Amount (potential) (kV) | Colorant Coating Unevenness | Color tone of Substrate |
|---|---|---|---|---|
| Example 1 | 0.0004 | 0 | no | transparent |
| Example 2 | 0.0004 | 0 | no | transparent |
| Comparative Example 1 | 0.0004 | +1 | yes | yellow |
| Comparative Example 2 | 0.1 | -4 | yes | pale yellow |
| Comparative Example 3 | 0 | -4 | yes | transparent |

Table 1 confirms the following: The substrate for optical information-recording media to which a specific amine compound was added of the invention (Example 1) did not charge (charge voltage 0 kV), and as compared with a case to which an amine compound was not added (Comparative Example 3, negative charging was significant), this is free from a problem of charging and a problem of colorant coating unevenness.

As opposed to this, the substrate for information-recording media (Comparative Example 1), to which an aromatic ring-having amine compound (described as an example of an antistatic agent in JP-A 2003-231801) was added, negatively charged through its charge amount was smaller than that of a substrate formed of a melting-process aromatic polycarbonate resin alone (Comparative Example 3), and it had a problem of colorant coating unevenness.
The negative charge amount of the substrate for information-recording media to which a hydroxyl group-having amine compound was added (Comparative Example 2) was on the same level as that of the substrate formed of an aromatic polycarbonate alone (Comparative Example 3), and it has a problem of colorant coating unevenness.

[Example 3]

100 parts by weight of the aromatic polycarbonate resin was taken along with an amine compound of Tinuvin 770, and a stabilizer (phosphite-type antioxidant), a UV absorbent and a release agent, in the ratio as in Table 2, then mixed in a tumbler, and the resulting mixture was melted, kneaded and pelletized, using a 40 mmϕ extruder equipped with a vent, at a cylinder temperature of 250°C.
Starting from the thus-obtained pellets, disc samples having a diameter of 100 mm and a thickness of 3 mm and rectangular plate samples having a length of 50 mm, a width of 30 mm and a thickness of 3 mm were formed, using an injection-molding machine (Sumitomo Heavy Industries' Model SH-100), at a cylinder temperature of 280°C and a mold temperature of 80°C. These were tested and evaluated for the following items and the results thereof are shown in Table 2.

[Test and Evaluation Method]

<Charge Amount (potential)>

The charge amount of the discs was measured under the following condition: Immediately after molded, the mold was opened and the molded article, the disc still in the mold was determined for its electrostatic charge amount at 1.0 cm from the center of the disc, using a digital electrostatic potentiometer, Kasuga Electric's KSD-0303. Three discs were sampled after the 5 shot-molding operation, and were tested for their potential, and their data were averaged. The value nearer to 0 means that the sample was less charged.

<Dust Adhesion Test (toner evaluation)>

The disc taken out of the molding machine is put into a toner test box filled with a black toner (plus-charged), and the toner is made to float in the box by patting the lower side of the box. One minute after the stop of the patting, and when the toner has stopped floating in the box, the disc is taken out of the box and visually checked for toner adhesion thereto. The samples are grouped into those with little toner adhesion (in that the disc resin is clearly seen) ; those with some toner adhesion (in that the disc resin is seen a little) ; and those with much toner adhesion (in that the disc resin is not seen). Based on these, the samples are evaluated.

<Hard Coat Test>

After tested for toner adhesion, the samples are sprayed with a UV-curable acrylic hard-coating agent (Mitsubishi Rayon's Acryking F-328). After thus coated, the sample are visually checked for the surface roughness.

<Transparency (turbidity)>

Using a turbidity meter, Nippon Denshoku's NDH2000, rectangular plate samples are tested for their turbidity. The turbidity is an index of non-transparency. When the turbidity value is smaller, the sample is more transparent.

<Color Hue>

Using a color-difference meter by Nippon Denshoku, rectangular plate samples are tested for light transmittance therethrough. From X, Y and Z values of the tested sample, YI value thereof is obtained by the following formula based on ASTM-E-1925. When the YI value is larger, the molded plate sample is more yellowish.

$$YI = [100(1.28X - 1.06Z)]/Y$$

<Surface Resistivity>

The surface resistivity of discs is measured as follows.
A digital ultra-high resistor R8340 and a resistivity chamber R12704, both by Advantest, are used for the measurement. Test electrodes (main electrode diameter = 50 mm; guard electrode inner diameter = 70 mm) by JIS K6911 are used. The surface resistivity is calculated by a formula: surface resistivity (unit = Ω) = 18.84 × surface resistance (found value, unit = Ω). When the value is smaller, the sample has better antistatic capability.

<High-Temperature High-Humidity Test>

In Example 5 and Comparative Example 5 to be mentioned below, 5 discs with an amine compound added thereto and 5 discs with no amine compound are formed, and these are left at 80°C and a humidity of 85 % for 48 hours and checked for hydrolyzed white spots. The number of the hydrolyzed white spots in the sample with an amine compound added thereto is counted.
The results are all shown in Table 2.

[Example 4]

100 parts by weight of the aromatic polycarbonate resin was taken along with an amine compound of Tinuvin 770, and a stabilizer (phosphite-type antioxidant), a UV absorbent and a release agent, in the ratio as in Table 2, then mixed in a tumbler, and the resulting mixture was melted, kneaded and pelletized, using a 40 mmϕ extruder equipped with a vent, at a cylinder temperature of 250°C.
Starting from the thus-obtained pellets, disc samples and rectangular plate samples were molded and tested and evaluated in the same manner as in Example 1. The results are shown in Table 2.

[Example 5]

100 parts by weight of the aromatic polycarbonate resin was taken along with an amine compound of Tinuvin 770, and a stabilizer (phosphite-type antioxidant), a UV absorbent and a release agent, in the ratio as in Table 2, then mixed in a tumbler, and the resulting mixture was melted, kneaded and pelletized, using a 40 mmϕ extruder equipped with a vent, at a cylinder temperature of 250°C.
Starting from the thus-obtained pellets, disc samples and rectangular plate samples were molded and tested and evaluated in the same manner as in Example 3. The results are shown in Table 2.
The discs formed in Example 5, amine-containing 5 discs and amine-free 5 discs, were left at 80°C at a humidity of 85 % for 48 hours, and checked for hydrolyzed white spots. The number of hydrolyzed white spots in the amine-added samples was from 1 to 10 spots/disc, and no increase in the number of the white spots was recognized in the amine-added samples, as compared with that in the amine-free samples.
Starting from the pellets obtained in these Examples, convex lenses having a diameter of 75 mm, a center thickness of 4.2 mm and a peripheral thickness of 1.0 mm were molded at a molding temperature of 290°C. These were colorless and transparent and were uniform.

[Comparative Example 4]

Discs and rectangular samples for measurement were formed in the same manner as in Example 3, to which, however, 0.100 parts by weight of an amine compound, Tinuvin 770 was added, and these were tested and evaluated. The results are shown in Table 2.

[Comparative Example 5]

Discs and rectangular samples for measurement were formed in the same manner as in Example 3, to which, however, Tinuvin 770 was not added, and these were tested and evaluated. The results are shown in Table 2.

[Comparative Example 6]

Discs and rectangular samples for measurement were formed in the same manner as in Example 3, to which, however, 0.010 parts by weight of an amine compound, trimethylamine was added, and these were tested and evaluated. The results are shown in Table 2.

[Comparative Example 7]

Discs and rectangular samples for measurement were formed in the same manner as in Example 3, to which, however, 0.010 parts by weight of an amine compound, Tinuvin 622LD was added, and these were tested for toner evaluation and for the charge amount of the molded substrate and the color tone thereof. The results are shown in Table 2.

[Example 6] (Rotary-Molded Article)

100 parts by weight of the aromatic polycarbonate resin was taken along with 0.100 parts by weight of an amine compound, Tinuvin 770, and 1.000 parts by weight of a release agent, Rikemal S-100A, and mixed in a tumbler. Using a 40 mmϕ extruder equipped with a vent, the resulting mixture was melted, kneaded and pelletized at a cylinder temperature of 250°C (pellets A). On the other hand, 100 parts by weight of the aromatic polycarbonate was taken along with 0.02 parts by weight of a stabilizer, Adekastab 2112 and 0.1 parts by weight of a UV absorbent, Tinuvin 320, and mixed in a tumbler. Using a 40 mmϕ extruder equipped with a vent, the resulting mixture was melted, kneaded and pelletized at a cylinder temperature of 250°C (pellets B). Thus obtained, the pellets A and B were mixed in a ratio A/B = 1/99 (by weight), and then ground with a turbo mill to obtain a powder having a particle size of from 150 μm to 500 μm.

This was dried under reduced pressure at 110°C for 24 hours, and 600 g of the powder was put into a columnar mold having a capacity of 5 liters and preheated at 240°C by the heating oil circulation pipe disposed around it. Then, the mold was sealed up and purged with nitrogen, and then oil heated at about 285°C was made to run through the oil circulation pipe. The mold was kept at that temperature for 15 minutes while biaxially rotated at a revolution of 10 rpm and at an autorotation of 20 rpm, and thereafter the oil circulation was changed to a 100°C circulation system, and the mold was kept as such for 9 minutes. Next, the mold was opened and spontaneously cooled in a room temperature environment to obtain a molded article. The molded article was tested by the above-mentioned methods for the charge amount thereof, the toner adhesion thereto and the color tone thereof.

Table 2

| | Amine Compound | Release agent | Stabilizer | UV Absorbent | Charge Amount (kV) | Toner Evaluation | Hard Coat Test | Turbidity (%) | Color Hue YI Value | Surface Resistivity | High-Temperature High-Humidity Test |
|---|---|---|---|---|---|---|---|---|---|---|---|
| Example 3 | 0.001 | 0.01 | 0.02 | 0.1 | 0.1 | no adhesion | no rough feel | 0.4 | 1.9 | $1.7\times10^{15}$ | not tested |
| Example 4 | 0.01 | 0.01 | 0.02 | 0.1 | 0.6 | no adhesion | little rough feel | 0.4 | 2.1 | $7.9\times10^{15}$ | not tested |
| Example 5 | 0.04 | 0.01 | 0.02 | 0.1 | 0.9 | no adhesion | little rough feel | 0.4 | 2.2 | $6.0\times10^{15}$ | 1 to 10 spots |
| Example 6 | 0.001 | 0.01 | 0.02 | 0.1 | 0.1 | no adhesion | not tested | not measured | 2.1 | not measured | not tested |
| Comparative Example 4 | 0.1 | 0.01 | 0.02 | 0.1 | 3 | no adhesion | rough feel | 0.4 | 2.5 | $6.4\times10^{15}$ | not tested |
| Comparative Example 5 | 0 | 0.01 | 0.02 | 0.1 | -4 | much adhesion | rough feel | 0.4 | 1.9 | $1.3\times10^{15}$ | 1 to 10 spots |
| Comparative Example 6 | 0.01 | 0.01 | 0.02 | 0.1 | 0.6 | no adhesion | little rough feel | 0.4 | 3.5 | $7.9\times10^{15}$ | not tested |
| Comparative Example 7 | 0.01 | 0.01 | 0.02 | 0.1 | -3 | some adhesion | rough feel | 0.4 | 3.2 | $6.2\times10^{15}$ | not tested |

Table 2 confirms the following effects: the molded articles with a specific amine compound added thereto of the invention (Examples 3 to 6) did not charge (charge voltage, -1 to 1 kV), and are free from a problem of charging as compared with the case to which no amine compound was added (Comparative Example 5), and no toner adhered to them.
After the hard coat test, their appearance was still good.

[Example 7]

Using the pellets of the composition of the above Examples 1 to 5, lamp lens analogues were formed by a known method. The lamp lens analogues were good in point of the charge amount (potential) and the appearance such as the color and the transparency. Fig. 1 shows the structure of the lamp lens analogues. In the drawing, (b) is a view seen in the side direction of (a). 1 is a body of the lens; 2 is a dome of the lens; 3 is an outer periphery of the lens; 4 is a gate (having a width of the lens outer periphery side of 8 mm, a width of the sprue side of 6 mm, and a thickness of the gate of 2 mm); 5 is a sprue (having a land length of 3 mm and a thickness of 1.8 mm); 6 is a diameter of the outer periphery of the lens (diameter, 110 mm); 7 is a diameter of the dome of the lens (diameter, 100 mm) ; 8 is a height from the outer periphery of the lens (10 mm) ; 9 is a height of the dome of the lens (7 mm) ; 10 is a thickness of the molded lens (2 mm).

INDUSTRIAL APPLICABILITY

The aromatic polycarbonate resin composition of the invention is characterized in that it does not charge or may charge little, and has particular advantages in that it has little adhesion of dust and particulate matter thereto and it is transparent. Accordingly, its industrial applicability is extremely great.
More concretely, the aromatic polycarbonate resin composition of the invention is free from a problem of dust adhesion to be caused by the negative chargeability of the aromatic polycarbonate resin and is free from an unpleasant feeling to be caused by its discharging when touched by someone. Further, the composition is free from other problems to be caused by its charging during production or transportation of molded articles. In addition, the aromatic polycarbonate resin composition of the invention may provide products excellent in moldability and transparency, and, for example, it has solved the problems of dust/impurities adhesion thereto owing to the charging during its production, scratches caused by the adhering matter, and production failure caused by adhesion of parts together. Furthermore, when the molded articles are subjected to hard coat treatment or other coating treatment, they are free from a problem of coating over the impurities adhering thereto to make the coated articles have a rough appearance.
Accordingly, the aromatic polycarbonate resin composition of the invention may be favorably employed for substrates for optical information-recording media, transparent optical parts, light appliance covers and transparent members for vehicles that are free from a problem of dust/impurities adhesion thereto owing to the charging in their use, and are free from a problem of scratching to be caused by the adhering matter.
In particular, when applied to substrates for color optical information-recording media, its effect is remarkable in that no coating unevenness occurs in spin-coating with dye; and the composition is therefore extremely useful.

## Claims

1. An aromatic polycarbonate resin composition comprising 100 parts by weight of a melting-process aromatic polycarbonate resin having a viscosity-average molecular weight of from 10,000 to 30,000, and from 0.00001 to 0.04 parts by weight of an amine compound, and the amine compound having an amine compound having neither an aromatic ring nor an acid group in the molecule and having a molecular weight of from 100 to 5,000.

2. The aromatic polycarbonate resin composition as claimed in claim 1, wherein the amine compound is a hindered amine compound.

3. The aromatic polycarbonate resin composition as claimed in claim 1, wherein the amine compound is a secondary or tertiary N-substituted amine compound.

4. The aromatic polycarbonate resin composition as claimed in claim 1, wherein the amine compound comprising a structure of >NH or >NR, and R represents an alkyl group having from 1 to 4 carbon atoms, or an alkenyl group having from 1 to 4 carbon atoms.

5. The aromatic polycarbonate resin composition as claimed in claim 1, wherein the amine compound comprises a piperidine structure in the molecule.

6. The aromatic polycarbonate resin composition as claimed in claim 1, wherein the amine compound comprises a 2,2,6,6-tetraalkylpiperidine structure in the molecule.

7. The aromatic polycarbonate resin composition as claimed in claim 1, wherein the amine compound is bis(2,2,6,6-tetramethyl-4-piperidyl) sebacate or a polycondensate of dibutylamine/1,3,5-triazine/N,N'-bis(2,2,6,6)-tetramethyl-4-piperidyl-1,6-hexamethylenediamine and N-(2,2,6,6-tetramethyl-4-piperidyl)butylamine.

8. The aromatic polycarbonate resin composition as claimed in claim 1, wherein the amount of the amine compound is from 0.00001 parts by weight to less than 0. 02 parts by weight relative to 100 parts by weight of the aromatic polycarbonate resin.

9. The aromatic polycarbonate resin composition as claimed in claim 1, which additionally comprises from 0.001 to 5 parts by weight of a UV absorbent and/or from 0.001 to 5 parts by weight of an antioxidant relative to 100 parts by weight of the aromatic polycarbonate resin, wherein the antioxidant is free from an amine compound having neither an aromatic ring nor an acid group in the molecule and having a molecular weight of from 100 to 5,000.

10. The aromatic polycarbonate resin composition as claimed in claim 9, wherein the UV absorbent is a benzotriazole compound.

11. The aromatic polycarbonate resin composition as claimed in claim 9, wherein the antioxidant is a phosphorus compound.

12. The aromatic polycarbonate resin composition as claimed in claim 9, wherein the amount of the amine compound is from 0.00001 parts by weight to less than 0. 02 parts by weight relative to 100 parts by weight of the aromatic polycarbonate resin.

13. An article formed of an aromatic polycarbonate resin composition of claim 1.

14. The article as claimed in claim 13, which is produced by an injection-molding process.

15. A substrate for optical information-recording media, which is formed of an aromatic polycarbonate resin composition of claim 1.

16. The substrate for optical information-recording media as claimed in claim 15, wherein the aromatic polycarbonate resin comprises a viscosity-average molecular weight of from 10,000 to 25,000.

17. The substrate for optical information-recording media as claimed in claim 15, wherein the amine compound is a hindered amine compound.

18. The substrate for optical information-recording media as claimed in claim 15, wherein the amine compound is a secondary or tertiary N-substituted amine compound.

19. The substrate for optical information-recording media as claimed in claim 15, wherein the amine compound comprises a structure of >NH or >NR, and R represents an alkyl group having from 1 to 4 carbon atoms, or an alkenyl group having from 1 to 4 carbon atoms.

20. The substrate for optical information-recording media as claimed in claim 15, wherein the amine compound comprises a piperidine structure in the molecule.

21. The substrate for optical information-recording media as claimed in claim 15, wherein the amine compound comprises a 2,2,6,6-tetraalkylpiperidine structure in the molecule.

22. The substrate for optical information-recording media as claimed in claim 15, wherein the amine compound is bis (2,2,6,6-tetramethyl-4-piperidyl) sebacate or a polycondensate of dibutylamine/1,3,5-triazine/N,N'-bis(2,2,6,6)-tetramethyl-4-piperidyl-1,6-hexamethylenediamine and N-(2,2,6,6-tetramethyl-4-piperidyl)butylamine.

23. The substrate for optical information-recording media as claimed in claim 15, wherein the amount of the amine compound is from 0.00001 parts by weight to less than 0.001 parts by weight relative to 100 parts by weight of the

aromatic polycarbonate resin.

**24.** The substrate for optical information-recording media as claimed in claim 15, which is a substrate for rewritable or write-once optical information-recording media.

**25.** The substrate for optical information-recording media as claimed in claim 15, which is a substrate for color optical information-recording media.

**26.** A transparent optical article formed of an aromatic polycarbonate resin composition of claim 1.

**27.** The transparent optical article as claimed in claim 26, which is produced by an injection-molding process.

**28.** The transparent optical article as claimed in claim 26, which is at least partly subjected to hard coat treatment.

**29.** The transparent optical article as claimed in claim 26, which is an optical plastic lens.

**30.** The transparent optical article as claimed in claim 26, which is an optical pickup lens.

**31.** A lighting appliance cover formed of an aromatic polycarbonate resin composition of claim 1.

**32.** The lighting appliance cover as claimed in claim 31, which is produced by an injection-molding process.

**33.** The lighting appliance cover as claimed in claim 31, which is produced by a rotary-molding process.

**34.** The lighting appliance cover as claimed in claim 31, which is at least partly subjected to hard coat treatment.

**35.** A transparent member for vehicles, formed of an aromatic polycarbonate resin composition of claim 1.

**36.** The transparent member for vehicles as claimed in claim 35, which is produced by an injection-molding process.

**37.** A transparent member for vehicles, formed of the aromatic polycarbonate resin composition of claim 9.

**38.** The transparent member for vehicles as claimed in claim 37, which is produced by an injection-molding process.

**39.** The transparent member for vehicles as claimed in claim 35, which is a lighting tool for vehicles.

**40.** The transparent member for vehicles as claimed in claim 37, which is a lighting tool for vehicles.

Fig. 1

(a)

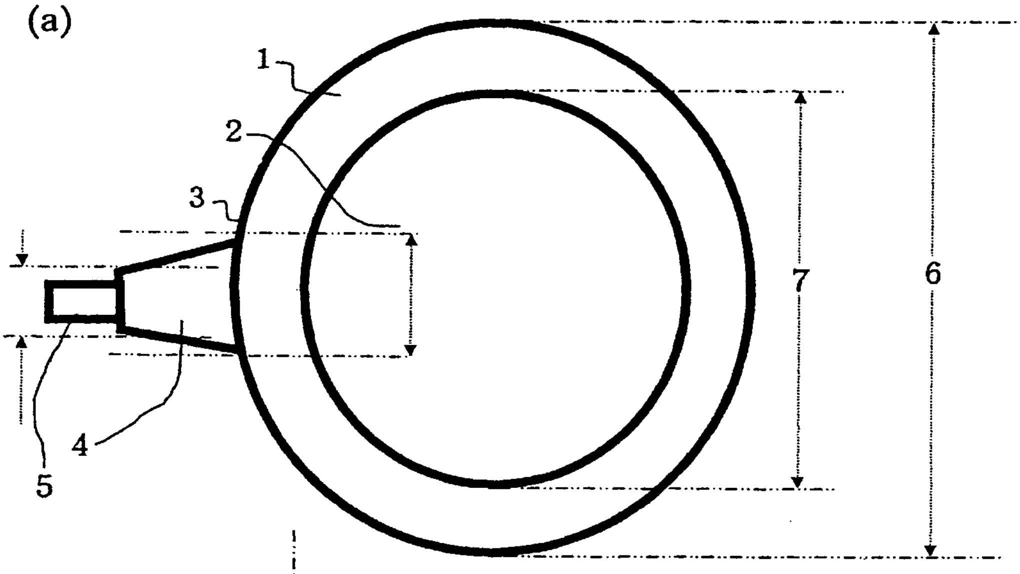


(b)

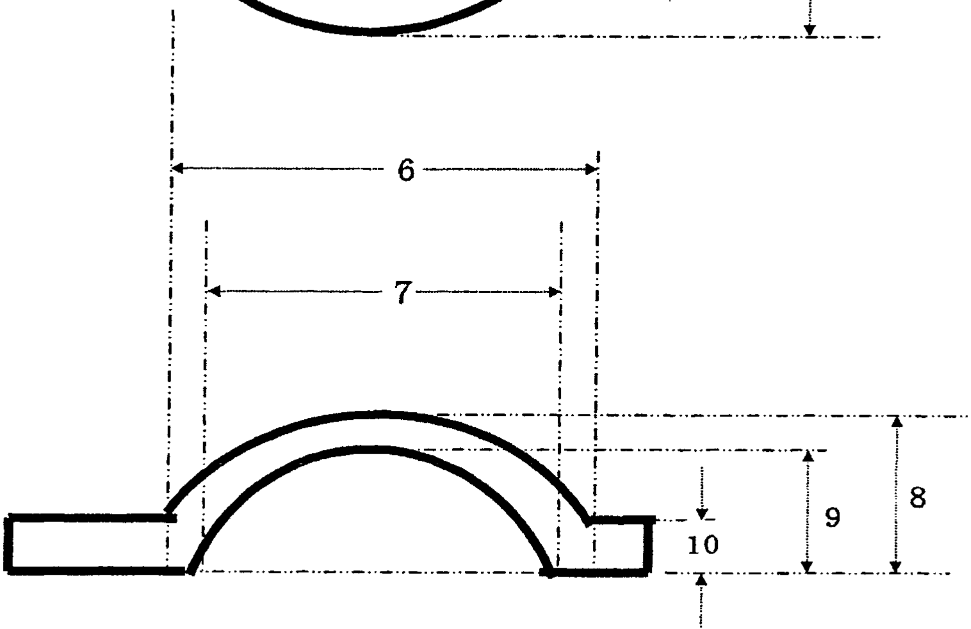

**INTERNATIONAL SEARCH REPORT**

International application No. PCT/JP2005/012154

A. CLASSIFICATION OF SUBJECT MATTER
Int.Cl[7] C08L69/00, B61J1/00, C08K5/17, 5/3435, F21V1/00, 3/00, G02B1/04, G11B7/135, 7/24, 11/105

According to International Patent Classification (IPC) or to both national classification and IPC

B. FIELDS SEARCHED

Minimum documentation searched (classification system followed by classification symbols)
Int.Cl[7] C08L69/00, B61J1/00, C08K5/17, 5/3435, F21V1/00, 3/00, G02B1/04, G11B7/135, 7/24, 11/105

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 04-363357 A (KANEKA Corp.),<br>16 December, 1992 (16.12.92),<br>Claims; Par. Nos. [0001], [0016] to [0018], [0049] to [0057]<br>(Family: none) | 1-25,35-40<br>26-34 |
| X<br>Y | JP 2002-302611 A (Asahi Denka Kogyo Kabushiki Kaisha),<br>18 October, 2002 (18.10.02),<br>Claims; Par. Nos. [0001], [0025] to [0041], [0044]<br>& WO 2002/81559 A1 & EP 1384749 A1<br>& US 2004/0099849 A1 | 1-14<br>15-40 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
05 September, 2005 (05.09.05)

Date of mailing of the international search report
27 September, 2005 (27.09.05)

Name and mailing address of the ISA/
Japanese Patent Office

Facsimile No.

Authorized officer

Telephone No.

Form PCT/ISA/210 (second sheet) (January 2004)

INTERNATIONAL SEARCH REPORT

International application No.
PCT/JP2005/012154

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2003-192830 A (Asahi Denka Kogyo Kabushiki Kaisha),<br>09 July, 2003 (09.07.03),<br>Claims; Par. Nos. [0001], [0044] to [0066], [0069]<br>& WO 2002/81559 A1 & EP 1384749 A1<br>& US 2004/0099849 A1 | 1-14<br>15-40 |
| X<br>Y | JP 2004-137471 A (Teijin Kasei Kabushiki Kaisha),<br>13 May, 2004 (13.05.04),<br>Claims; Par. Nos. [0048] to [0055], [0077] to [0084], [0094] to [0100], [0105], [0106], [0146]<br>(Family: none) | 1-14,26-40<br>15-25 |
| X<br>Y | JP 2004-161980 A (Teijin Kasei Kabushiki Kaisha),<br>10 June, 2004 (10.06.04),<br>Claims; Par. Nos. [0048] to [0056], [0109] to [0116], [0145] to [0151], [0190]<br>(Family: none) | 1-14,26-40<br>15-25 |
| X<br>Y | JP 2000-327895 A (Teijin Ltd.),<br>28 November, 2000 (28.11.00),<br>Claims; Par. Nos. [0001], [0021] to [0027], [0065] to [0072], [0145] to [0151], [0190]<br>(Family: none) | 1-30<br>31-40 |
| X | JP 2001-288352 A (Teijin Ltd.),<br>16 October, 2001 (16.10.01),<br>Claims; Par. Nos. [0001], [0029] to [0038], [0110] to [0120], [0138], [0139], [0154]<br>(Family: none) | 1-40 |
| X | JP 2001-279082 A (Teijin Ltd.),<br>10 October, 2001 (10.10.01),<br>Claims; Par. Nos. [0040], [0077] to [0085], [0097]<br>(Family: none) | 1-40 |
| X | JP 06-136113 A (GE Plastics Japan Ltd.),<br>17 May, 1994 (17.05.94),<br>Claims; Par. Nos. [0014], [0089] to [0093], [0112] to [0118], [0122]<br>(Family: none) | 1-40 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5606008 A
- JP 6414267 A
- JP 3064368 A
- JP 2003128903 A
- JP 2003231801 A
- JP 2001329157 A
- US 5075348 A
- JP 2002260412 A
- JP 2000345347 A
- JP 2001126512 A
- JP 7268089 A
- JP 6199258 A
- JP 10086743 A
- JP 2004182107 A


### Non-patent literature cited in the description


- *Makromol. Chem.,* 1965, vol. 88, 215